# EUROPÄISCHE PATENTSCHRIFT

(11) **EP 3 047 732 B1**
(45) Veröffentlichungstag und Bekanntmachung des Hinweises auf die Patenterteilung: **02.01.2019**
(21) Anmeldenummer: 15151915.4
(22) Anmeldetag: 21.01.2015
(51) Int. Cl.: A23C 19/076, A01J 25/12

(54) **Kontinuierliches Verfahren zur Herstellung einer Weisskäsezubereitung**
Continuous process for the production of a white cheese composition
Procedée continue pour la preparation d'un composition de fromage blanc

(43) Veröffentlichungstag der Anmeldung: 27.07.2016
(73) Patentinhaber: DMK Deutsches Milchkontor GmbH, 27404 Zeven (DE)
(72) Erfinder: May, Martin, 32694 Dörentrup (DE)
(74) Vertreter: Fabry, Bernd

(56) Entgegenhaltungen:
- EP-A1- 1 902 624
- DE-A1-102005 059 052
- DE-C1- 3 924 372
- DE-U1-202006 000 282
- US-A- 6 120 809
- DATABASE FSTA [Online] INTERNATIONAL FOOD INFORMATION SERVICE (IFIS), FRANkFURT-MAIN, DE; ELISEEV O M ET AL: "Effect of vacuum treatment on structure formation of cheeses put into moulds by filling or pouring. (translated)", XP002743608, Database accession no. FS-1980-07-P-1244 & ELISEEV O M; TABACHNIKOV V P; CHASOV F V; SAVEL'EV A A: "Effect of vacuum treatment on structure formation of cheeses put into moulds by filling or pouring.", TRUDY, VSESOYUZNYI NAUCHNO-ISSLEDOVATEL'SKII INSTITUT MASLODEL'NOI I SYRODEL'NOI PROMYSHLENNO, Nr. No. 23, 1. Januar 1978 (1978-01-01), Seite 65, TRUDY, VSESOYUZNYI NAUCHNO-ISSLEDOVATEL'SKII INSTITUT MASLODEL'NOI I SYRODEL'NOI PROMYSHLENNOSTI 1978 VNIIMISP, UGLICH, USSR
- SACHDEVA S ET AL: "PANEER - EINE ALTERNATIVE ZU TOFU", DMZ. LEBENSMITTELINDUSTRIE UND MILCHWISSENSCHAFT, VOLKSWIRTSCHAFTLICHER VERLAG GMBH. MUNCHEN, DE, Bd. 113, Nr. 22, 27. Mai 1992 (1992-05-27) , Seiten 645-648, XP000268710, ISSN: 0938-9369
- J. Hauschildt, M. Weisenfels: "Alles hygienisch", , 9. Dezember 2010 (2010-12-09), XP002743609, Gefunden im Internet: URL:http://www.prozesstechnik-online.de/ho me/-/article/31534493/32090353/ [gefunden am 2015-08-25]
- Y.H.Hui: "Handbook of Food Products Manufacture", 1. Januar 2007 (2007-01-01), Wiley, california, XP002743611, Seiten 665-665, * das ganze Dokument *
- R. Heiss: "Lebensmitteltechnologie", 1. Januar 1998 (1998-01-01), Springer, Berlin, XP002743610, Seiten 17-27, * das ganze Dokument *

## Beschreibung

### GEBIET DER ERFINDUNG

Die Erfindung befindet sich auf dem Gebiet der Käseherstellung und betrifft ein verbessertes und kontinuierliches Verfahren zur Herstellung von Weißkäse.

### STAND DER TECHNIK

Weißkäse ist ein Käse ohne Farbstoff und einer Trockenmasse von 40 bis 60 Gew.-%, dem zur Konservierung 3 bis 8 Gew.-% Kochsalz zugesetzt werden und der eine bröckelige Konsistenz hat. In Europa wird dieser Salzlakenkäse in der Regel zu Würfeln oder Blöcken verpresst und vor allem als Beigabe zu Salaten verwendet. In Asien, insbesondere in Indien hingegen dient Weißkäse, der dort als Paneer oder Panir bezeichnet wird, vor allem zur Proteinversorgung und als Einlage in Currys; dabei ähnelt er von Konsistenz und Geschmack dem Tofu. Klassisch wird der Paneer hergestellt, indem man gekochte Milch durch Zugabe von Zitronensaft, Joghurt oder Essig und nochmaliges Aufkochen zum Gerinnen bringt. Durch Filtrierung wird die Molke dann von der festen Masse getrennt und diese in eine Form gebracht.

Die industrielle Herstellung sieht heute nicht viel anders aus. Dazu wird von pasteurisierter (Kessel-)Milch ausgegangen, die von 4 °C direkt oder indirekt auf 80 bis 90 °C erhitzt und dann unter Zugabe von Säure (Zitronensäure, Milchsäure) bei dieser Temperatur denaturiert wird. Nach einer Verweilzeit von etwa 8 Minuten wird die Molke abgepresst und die verbleibende Masse geformt. Diese gelangt wird abgekühlt, dann in ein Salzbad gegeben und schließlich abgepackt.

Gegenstand des Aufsatzes von SACHDEVA et al. mit dem Titel "Paneer - eine Alternative zu Tofu" (DMZ DEUTSCHE MOLKEREI-ZEITUNG LEBENSMITTELINDUSTRIE UND MILCH-WIRTSCHAFT, 113, 22, 1992, SEITEN 645-648) ist eine Untersuchung der Bedingungen, unter denen ein akzeptabel Paneer aus Kuhmilch hergestellt werden kann. Dabei wurde der Einfluss der Zugabe von Calciumchlorid und des pH-Wertes bei der Koagulation sowie der Einfluss der Verpackung unter Vakuum untersucht. Gemäß diesem Dokument wird Milch auf 70 °C erhitzt, mit Zitronensäure versetzt und bei 85 °C denaturiert. Es wird eine Verweilzeit von 5 Minuten berichtet, danach wird die überstehende Molke abgetrennt und die anhaftende Molke durch Abtropfen durch Tücher entfernt. Anschließend wird das Rohprodukt mechanisch in Formen gegeben, abgepresst, gewässert und bei Raumtemperatur abgepackt. Der Ausgangsmilch wurde zuvor Calciumchlorid zugegeben, gegebenenfalls wurde der Paneer vor dem Abpacken noch in ein Salzbad gegeben, um die Haltbarkeit zu verbessern.

Der Aufsatz von HAUSCHILDT et al. mit dem Titel "ALLES HYGIENISCH Vakuumfüller portionieren und formen Käseprodukte" (http://www.prozesstechnik-online.de/food/- /article/5829531/30328963/maximized/) berichtet von dem Einsatz der Vakuumfüllmaschinen der Robot-HP-E-Baureihe im Dairy Design für das Abfüllen und Portionieren von Frischkäse oder niedrig viskosen Käsemassen. Der Einsatz dieser Maschinen ermöglicht das Herstellen unterschiedlicher Formen sowie den Prozess hygienischen und effizienter zu gestalten.

Die industrielle Herstellung ist jedoch bis heute mit einer ganzen Reihe von Nachteilen behaftet, als da sind:
- die Produkte besitzen nur eine geringe Haltbarkeit
- das Abpressen der Molke ist schlecht für die Textur des Weißkäse;
- das nachträgliche Verbringen im Salzbad ist zeit- und kostenintensiv
- der Prozess läuft nur batchweise.

Die Aufgabe der vorliegenden hat daher darin bestanden, das Herstellverfahren für Weißkäse (bzw. für Paneer oder Panir) so zu verbessern, dass die oben geschilderten Nachteile überwunden werden. Insbesondere sollte das Verfahren kontinuierlich ausgestaltet sein und ohne zeitaufwendiges Verbringen der Käsemasse in einer Salzlake auskommen.

### BESCHREIBUNG DER ERFINDUNG

Die Erfindung betrifft ein kontinuierliches Verfahren zur Herstellung einer Weißkäse, umfassend die folgenden Schritte:
(a) Bereitstellen einer pasteurisierten Milch;
   (b11) Erhitzen der pasteurisierten Milch auf eine Temperatur von 80 bis 95 °C;
   (b12) Denaturierung der erhitzen Milch durch Zugabe einer Lebensmittelsäure oder Lab,
(c) Unterwerfung des denaturierten Produktes einer Verweilzeit über einen Zeitraum von 5 bis 15 Minuten;
(d) Abtrennen der Molke aus dem resultierenden Produkt mit Hilfe eines Lochbands;
(e) Zugabe von Hilfsstoffen zum so erhaltenen Rückstand aus Schritt (d)
(f) Formgebung des Produktes aus Schritt (e) mit Hilfe eines Vakuumformers und schließlich
(g) Abfüllung des Produktes bei 60 bis 80 °C aus der Form in die Endverpackung.

Überraschenderweise wurde gefunden, dass das erfindungsgemäße Verfahren die eingangs geschilderte komplexe Aufgabenstellung voll umfänglich löst. Die Erfindung betrifft ein kontinuierliches Verfahren, dass sich vom Stand der Technik insbesondere dadurch unterscheidet, dass das von der Molke befreite Produkt mit einem Vakuumfüller in die Form gezogen wird. Das ist eine wesentlich schonendere Vorgehensweise als das Verpressen und erlaubt ebenfalls eine freie Formatwahl. Vorzugsweise werden Stränge hergestellt, die dann separat geformt werden.

Bei dieser Vorgehensweise ist es zudem nun auch möglich, beim Formen schon Zusätze wie Salz oder Gewürze zuzugeben, so dass ein zentrales Anliegen der Erfindung, das Umgehen eines Salzbades, möglich wird. Das Produkt muss daher auch nicht mehr für das Salzbad abgekühlt werden, sondern kann heiß (beispielsweise bei etwa 75 °C) abgefüllt werden, was dazu führt, dass das Produkt statt 2 bis 3 Wochen nun 6 bis 8 Wochen haltbar ist.

### PASTEURISIERTE MILCH

Als Ausgangsstoff für die Herstellung der Weißkäsezubereitung wird pasteurisierte Milch eingesetzt, die auch als Kessel- oder Käsereimilch bezeichnet wird. Hierunter wird eine Rohmilch verstanden, die nach Pasteurisierung und Fetteinstellung zur Herstellung von Käse, aber auch Joghurt, dickgelegt werden soll. Da die Käseherstellung früher überwiegend in Kesseln durchgeführt wurde - was heute teilweise auch noch für die Herstellung von Parmesan typisch ist - wird auch synonym von Kesselmilch gesprochen.

Damit Rohmilch für die Herstellung von Käse eingesetzt werden kann, muss sie gesetzlichen Anforderungen entsprechen, die in der Käseverordnung niedergelegt sind. Üblicherweise beginnt der Verarbeitungsprozess mit einer Erhitzung der Rohmilch durch Wärmeaustausch mit Wärmeträgermedien bei gleichzeitiger teilweiser Wärmerückgewinnung. Die Separation in Magermilch, Rahm und Separatorschlamm findet in diesem erhitzten Zustand der Rohmilch statt. Ferner wird die Erhitzung so weit getrieben, dass eine erste Thermisierung oder Pasteurisierung stattfindet. Nach ihrer anschließenden Standardisierung wird die standardisierte Milch in einem Tank vorgestapelt und die aus dem Tank abgezogene vorgestapelte Milch durch erneute Erhitzung einer zweiten Pasteurisierung unterzogen, um zwischenzeitlich gebildete Keime abzutöten.

Es wird eine Kesselmilch eingesetzt, wie sie nach dem Verfahren erhalten wird. Hierzu wird
(a) Rohmilch einer Wärmebehandlung unterwirft,
(b) das wärmebehandelte Produkt von festen Bestandteilen befreit,
(c) das resultierende Zwischenprodukt entfettet,
(d) die so erhaltene Magermilch einer Mikrofiltration unterwirft und
(e) das resultierende Permeat durch Zugabe einer Menge des im Schritt (c) abgetrennten Rahms auf den gewünschten Fettgehalt einstellt, und die so erhaltene standardisierte Milch
(f) abschließend pasteurisiert.

**Wärmebehandlung.** Die Wärmebehandlung der Rohmilch ("Entkeimung") erfolgt insgesamt vorzugsweise in Wärmeaustauschern, wobei sich speziell Plattenwärmeaustauscher als besonders geeignet erwiesen haben. An den Wärmeaustauschern liegt ein Temperaturgradient an, der jedoch so gewählt ist, dass die Rohmilch für eine Verweilzeit von mindestens 20 und höchstens 60 Sekunden, vorzugsweise etwa 30 Sekunden auf eine Temperatur von etwa 70 bis 80 °C und insbesondere etwa 72 bis 74 °C erhitzt wird.

**Feststoffabtrennung.** Die Abtrennung von Feststoffen ("Käsestaub") sowie die Entrahmung des Fettanteils von etwa 4 Gew.-% erfolgt üblicherweise in einem nachgeschalteten Bauteil, vorzugsweise einem Separator. Derartige Bauteile sind aus dem Stand der Technik hinreichend bekannt. In der Milchindustrie sehr verbreitet sind Separatoren der Firma GEA Westfalia Separator GmbH, mit denen die beiden Schritte einzeln oder gemeinsam durchgeführt werden können (http://www.westfalia-separator.com/de/anwendungen /molkereitechnik/milch-molke.html). Entsprechende Bauteile sind beispielsweise auch in der DE 10036085 C1 (Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.

**Mikrofiltration.** Die Mikrofiltration ist ein Verfahren zur Stoffabtrennung. Der wesentliche Unterschied zwischen der Mikro- und der Ultrafiltration liegt in den verschiedenen Porengrößen und in der unterschiedlichen Membranstruktur wie den Werkstoffen und den beteiligten Filtermaterialien. Eine Filtration durch Membranen mit einer Porengröße < 0,1 µm wird in der Regel Ultrafiltration genannt, während die Filtration bei Porengrößen > 0,1 µm gewöhnlich als Mikrofiltration bezeichnet wird. In beiden Fällen handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt. Der Werkstoff der Filterfläche kann je Einsatzgebiet aus Edelstahl, Kunststoff, Keramik oder textilen Gewebe bestehen. Es gibt verschiedene Erscheinungsformen der Filterelemente: Kerzenfilter, Flachmembranen, Taschenfilter und Hohlfasermodule, die im Sinne der vorliegenden Erfindung alle grundsätzlich geeignet sind.

**Standardisierung.** Der für die Standardisierung der aus der Rohmilch separierten Magermilch zuzugebende Rahm kann aus dem aus ihr abgetrennten Rahm entnommen werden. Zusätzlich oder alternativ kann der zuzugebende Rahm aber auch aus anderen Prozessen, insbesondere aus einem Molkeverarbeitungsprozess, in dem Molkenrahm anfällt, entnommen werden. Weiterhin kann bei der Standardisierung durch eine dosierte Zugabe von Eiweiß, das beispielsweise einem anderen Milchverarbeitungsprozess entnommen wird, auch der Eiweißgehalt standardisiert werden.

### DENATURIERUNG

Die Denaturierung der pasteurisierten Milch kann in an sich bekannter Weise durchgeführt werden, in einem Temperaturbereich von 80 bis 95 °C.

Die Denaturierung kann mit Hilfe von Lebensmittelsäuren, vorzugsweise durch Zugabe von etwa 0,1 bis etwa 0,5 Gew.-% Milchsäure und/oder Zitronensäure durchgeführt werden.

Alternativ kann die Denaturierung auch durch Zugabe von Lab erfolgen. Dies hat den Vorteil, dass die Denaturierung auch in der Kälte, d.h. in einem Temperaturbereich von etwa 20 bis etwa 50 °C durchgeführt werden kann.

### ABTRENNUNG DER MOLKE

Die Abtrennung der Molke erfolgt mit einem so genannten Lochband. Hierbei handelt es sich um einen Streifen aus Kunststoff, Metall oder Textil, der mit Löchern versehen ist und der sich in Förderrichtung verjüngt. Durch die Perforation tropft die Molke ohne Druck ab. Auf diese Weise wird eine gleichmäßige Textur des Weißkäses erhalten und insbesondere der Bröckeligkeit entgegengewirkt. Gleichzeitig lässt sich dieser Vorgang im Gegensatz zu Pressverfahren gerade auch kontinuierlich durchführen.

Vorzugsweise wird das Verfahren so gelenkt, dass nach Abtrennung der Molke ein Rückstand erhalten wird, der eine Trockenmasse von etwa 40 bis etwa 60 Gew.-% und vorzugsweise etwa 45 bis etwa 55 Gew.-% aufweist.

### FORMGEBUNG

Die von der Molke befreite und auf eine definierte Trockenmasse eingestellte Weißkäsezubereitung wird abschließend in Form gebracht. Erfindungsgemäß erfolgt dies mit Hilfe eines so genannten Vakuumformers. Hierunter versteht der Fachmann ein Bauteil, bei dem eine halbfeste oder pastöse Masse, die bei Normalbedingungen keine ausreichenden Fließeigenschaften besitzt, durch Anlegen eines Vakuums in eine vorgesehene Form gezogen wird. Bei diesen Formen handelt es sich vorzugsweise um rechteckige Vorlagen, so dass die Käsemasse anschließend in Form von Stangen oder Barren vorliegt, welche dann weiter zerkleinert werden können, um schließlich beispielsweise die bekannten Paneerwürfel zu ergeben. Der Vorteil des Vakuumformers ist zweifach: zunächst kann das Abfüllen kontinuierlich erfolgen, d.h. der Vorgang wird nur kurz unterbrochen, um die Vorlage zu wechseln. Zum anderen erlaubt dieses Verfahren, dem Weißkäse weitere Bestandteile zuzusetzen. Hierzu zählt insbesondere Kochsalz, das in Mengen von typisch 1 bis 10 Gew.-% und insbesondere 4 bis 8 Gew.-% - bezogen auf das von Molke befreite Produkt - zugesetzt wird. Durch das Vakuumformen wird eine gleichmäßige Verteilung der Zusatzstoffe in der Käsemasse erreicht. Auch dies ist wieder mit zwei Vorteilen verbunden: zum einen spart man das aufwendige Salzbad ein, zum anderen wird der Käse nicht nur in den äußeren Bereichen mit Salz konserviert, sondern durch die bessere Verteilung des Salzes in Gänze nachhaltiger geschützt. Im Ergebnis führt dies zu einer signifikanten Verbesserung der Haltbarkeit um das 2 bis 3fache.

Selbstverständlich ist es hierbei ebenfalls möglich, dem Weißkäse auch Gewürze, Aromen und/oder Kräuter zuzugeben und auf diese Weise durchaus untypische Produkte mit eigener Geschmacksnote herzustellen.

Ein letzter Vorteil dieses Verfahrensschrittes besteht darin, dass die Abfüllung heiß erfolgt. Musst der Weißkäse üblicherweise nach der Formgebung erst auf Umgebungstemperatur abgekühlt werden, bevor er in das Salzlakebad gelegt wird, erfolgt im Sinne des erfindungsgemäßen Verfahrens die Abfüllung direkt bei 60 bis 80 °C. Dies spart nicht nur Zeit und Energie, sondern steigert abermals auch die Haltbarkeit, weil auf diese Weise die Keimbildung vermieden wird.

### BEISPIELE

### BEISPIEL 1

1000 L pasteurisierte Kesselmilch mit einem Fettanteil von 45 Gew.-% wurde in einem Edelstahltank mit Außenheizung und Innenrührwerk schonend auf 90 °C vorerwärmt. Es folgte die Zugabe von 30 kg (entsprechend etwa 3 Gew.-%) Milchsäure, die innerhalb von 15 Minuten eingerührt wurde. Das so denaturierte Produkt wurde nach Ausschalten des Rührwerkes weitere 10 Minuten bei der Temperatur gehalten und dann mit einer Geschwindigkeit von 50 L/min auf ein kontinuierlich laufendes Lochband (Lochdurchmesser: ca. 10 mm) gegeben und so von der Molke befreit. Es wurde eine Weißkäsemasse mit einem Trockenanteil von 52 Gew.-% erhalten. Diese Masse wurde bei einer Temperatur von noch etwa 80 °C kontinuierlich einem Vakuumformer zugeführt und dort mit Kochsalz in einer Menge von etwa 6 Gew.-% beaufschlagt. Die so behandelte Käsemasse wurde bei einem Druck von 100 mbar und einer Temperatur von ca. 75 °C kontinuierlich in Formen abgefüllt und aseptisch verschweißt.

### BEISPIEL 2

1000 L pasteurisierte Kesselmilch mit einem Fettanteil von 45 Gew.-% wurde in einem Edelstahltank mit Außenheizung und Innenrührwerk schonend auf 90 °C vorerwärmt. Es folgte die Zugabe von 20 kg (entsprechend etwa 2 Gew.-%) Lab, die innerhalb von 15 Minuten eingerührt wurde. Das so denaturierte Produkt wurde nach Ausschalten des Rührwerkes weitere 10 Minuten bei der Temperatur gehalten und dann mit einer Geschwindigkeit von 50 L/min auf ein kontinuierlich laufendes Lochband (Lochdurchmesser: ca. 10 mm) gegeben und so von der Molke befreit. Es wurde eine Weißkäsemasse mit einem Trockenanteil von 47 Gew.-% erhalten. Diese Masse wurde bei einer Temperatur von noch etwa 80 °C kontinuierlich einem Vakuumformer zugeführt und dort mit Kochsalz und Rosenpaprikapulver in einer Menge von jeweils etwa 4 Gew.-% beaufschlagt. Die so behandelte Käsemasse wurde bei einem Druck von 100 mbar und einer Temperatur von ca. 75 °C kontinuierlich in Formen abgefüllt und aseptisch verschweißt.

### BEISPIEL 3

1000 L pasteurisierte Kesselmilch mit einem Fettanteil von 45 Gew.-% wurde in einem Edelstahltank mit Außenheizung und Innenrührwerk mit 20 kg (entsprechend etwa 2 Gew.-%) Lab versetzt, die innerhalb von 15 Minuten eingerührt wurden. Das so denaturierte Produkt wurde nach Ausschalten des Rührwerkes schonend auf 85 °C erwärmt, weitere 10 Minuten bei der Temperatur gehalten und dann mit einer Geschwindigkeit von 50 L/min auf ein kontinuierlich laufendes Lochband (Lochdurchmesser: ca. 10 mm) gegeben und so von der Molke befreit. Es wurde eine Weißkäsemasse mit einem Trockenanteil von 50 Gew.-% erhalten. Diese Masse wurde bei einer Temperatur von noch etwa 80 °C kontinuierlich einem Vakuumformer zugeführt und dort mit Kochsalz und einer Kräutergewürzpaste in einer Menge von jeweils etwa 4 Gew.-% beaufschlagt. Die so behandelte Käsemasse wurde bei einem Druck von 100 mbar und einer Temperatur von ca. 75 °C kontinuierlich in Formen abgefüllt und aseptisch verschweißt.

### BEISPIEL 3

Eine auf einen Fettgehalt von 45% pasteurisierte Kesselmilch wurde mit Hilfe eines geeigneten Erhitzers (Platten- oder Röhrenwärmetauscher) auf 90°C vorgewärmt. Der erhitzen Milch wird mit Hilfe einer Verwirbelungsstrecke Inline etwas 1-9g Citronensäure pro 1000g Milch in gelöster Form zugeführt. Es kann aus technologischen Gründen die Milch ggf. vor der Säurezugabe auf 70°C gekühlt werden. Das so gewonnene Bruch-Molke Gemisch wurde auf ein kontinuierlich laufendes Lochband (Lochdurchmesser: ca. 10 mm) gegeben und so von der Molke befreit. Es wurde eine Weißkäsemasse mit einem Trockenanteil von 52 Gew.-% erhalten. Diese Masse wurde bei einer Temperatur von noch etwa 60-80 °C kontinuierlich einem Vakuumformer zugeführt und dort mit Kochsalz in einer Menge von etwa 6 Gew.-% beaufschlagt. Die so behandelte Käsemasse wurde bei einem Druck von 100 mbar und einer Temperatur von ca. 65 °C kontinuierlich in Formen abgefüllt und aseptisch verschweißt.

## Patentansprüche

1. Kontinuierliches Verfahren zur Herstellung von Weißkäse, umfassend die folgenden Schritte:
(a) Bereitstellen einer pasteurisierten Milch;
(b11) Erhitzen der pasteurisierten Milch auf eine Temperatur von 80 bis 95 °C;
(b12) Denaturierung der erhitzen Milch durch Zugabe einer Lebensmittelsäure oder Lab,
(c) Unterwerfung des denaturierten Produktes einer Verweilzeit über einen Zeitraum von 5 bis 15 Minuten;
(d) Abtrennen der Molke aus dem resultierenden Produkt mit Hilfe eines Lochbands;
(e) Zugabe von Hilfsstoffen zum so erhaltenen Rückstand aus Schritt (d)
(f) Formgebung des Produktes aus Schritt (e) mit Hilfe eines Vakuumformers und schließlich
(g) Abfüllung des Produktes bei 60 bis 80 °C aus der Form in die Endverpackung.

2. Verfahren nach Anspruch 1, **dadurch gekennzeichnet, dass** man als Lebensmittelsäuren Milchsäure oder Zitronensäure einsetzt.

3. Verfahren nach den Ansprüchen 1 und/oder 2, **dadurch gekennzeichnet, dass** man die Denaturierung bei einer Temperatur von 80 bis 95 °C durchführt.

4. Verfahren nach mindestens einem der Ansprüche 1 bis 3, **dadurch gekennzeichnet, dass** man durch Abtrennung der Molke einen Rückstand herstellt, der eine Trockenmasse von etwa 40 bis etwa 60 Gew.-% aufweist.

5. Verfahren nach mindestens einem der Ansprüche 1 bis 4, **dadurch gekennzeichnet, dass** man bei der Formgebung Salz zugibt.

6. Verfahren nach Anspruch 5, **dadurch gekennzeichnet, dass** man 1 bis 10 Gew.-% Salz - bezogen auf das von der Molke befreite Produkt - einsetzt.

7. Verfahren nach mindestens einem der Ansprüche 1 bis 6, **dadurch gekennzeichnet, dass** man bei der Formgebung Gewürze, Aromen und/oder Kräuter zugibt.

8. Verfahren nach mindestens einem der Ansprüche 1 bis 7, **dadurch gekennzeichnet, dass** man den Weißkäse aus der Form ohne Abkühlung in die Endverpackung abfüllt.

## Claims

1. A continuous process for producing a white cheese preparation, comprising the following steps:
(a) providing a pasteurized milk;
(b11) heating the pasteurized milk to a temperature from 80 to 95 °C,
(b12) denaturing the heated milk by addition of a food acid or rennet
(c) subjecting the denatured product to a dwell time of from 5 to 15 minutes,
(d) removing whey from the resultant product using a sieving belt,
(e) adding additives to the thus obtained residue from step (d),
(f) shaping the product from step (e) with the aid of a vacuum former and finally
(g) charging the product from the mould into the final packaging at a temperature of from 60 to 80 °C.

2. Process according to claim 1, wherein the food acid used is lactic acid or citric acid.

3. Process according to claims 1 and/or 2, wherein the denaturation is carried out at a temperature from 80 to 95 °C.

4. Process according to at least one of claims 1 to 3, **characterized in that** after separating off the whey, a residue is obtained which has a dry mass from about 40 to about 60% by weight.

5. Process according to at least one of claims 1 to 4, wherein salt is added during shaping.

6. Process according to claim 5, wherein 1 to 10% by weight of salt, based on the product freed from the whey, is added.

7. Process according to at least one of claims 1 to 6, wherein during shaping spices, flavorings, and/or herbs are added.

8. Process according to at least one of claims 1 to 7, wherein the white cheese from the mould is charged into the final packaging without cooling.

## Revendications

1. Procédé continu de fabrication de fromage blanc, comprenant les étapes suivantes :
(a) la préparation d'un lait pasteurisé ;
(b11) le chauffage du lait pasteurisé à une température de 80 à 95 °C ;
(b12) la dénaturation du lait chauffé par ajout d'un acide alimentaire ou de présure,
(c) la soumission du produit dénaturé à un temps de séjour pendant une durée de 5 à 15 minutes;
(d) la séparation du lactosérum du produit résultant à l'aide d'une bande perforée ;
(e) l'ajout d'adjuvants au résidu ainsi obtenu de l'étape (d),
(f) le façonnage du produit de l'étape (e) à l'aide d'un dispositif de façonnage sous vide, et enfin
(g) le remplissage de l'emballage final avec le produit issu du moule à une température de 60 à 80 °C.

2. Procédé selon la revendication 1, **caractérisé en ce que** l'acide lactique ou l'acide citrique est utilisé en tant qu'acide alimentaire.

3. Procédé selon les revendications 1 et/ou 2, **caractérisé en ce que** la dénaturation est réalisée à une température de 80 à 95 °C.

4. Procédé selon au moins l'une quelconque des revendications 1 à 3, **caractérisé en ce qu'**un résidu qui présente une masse sèche d'environ 40 à environ 60 % en poids est formé par séparation du lactosérum.

5. Procédé selon au moins l'une quelconque des revendications 1 à 4, **caractérisé en ce que** du sel est ajouté lors du façonnage.

6. Procédé selon la revendication 5, **caractérisé en ce que** 1 à 10 % en poids de sel, par rapport au produit débarrassé du lactosérum, est utilisé.

7. Procédé selon au moins l'une quelconque des revendications 1 à 6, **caractérisé en ce que** des épices, des arômes et/ou des herbes sont ajoutés lors du façonnage.

8. Procédé selon au moins l'une quelconque des revendications 1 à 7, **caractérisé en ce que** l'emballage final est rempli avec le fromage blanc issu du moule sans refroidissement.
